# EUROPEAN PATENT SPECIFICATION

(11) **EP 2 317 781 B1**
(45) Date of publication and mention of the grant of the patent: **07.05.2014**
(21) Application number: 09174784.0
(22) Date of filing: 02.11.2009
(51) Int. Cl.: H04W 4/02, H04L 29/08

(54) **Integration of mobile devices with data communication systems**
Integration von mobilen Vorrichtungen mit Datenkommunikationssystemen
Intégration de dispositifs mobiles avec des systèmes de communication de données

(43) Date of publication of application: 04.05.2011
(73) Proprietor: BlackBerry Limited, Waterloo, ON N2K 0A7 (CA)
(72) Inventor: Shackleton, Barbara, Waterloo Ontario N2K 0A2 (CA)
(74) Representative: MERH-IP Matias Erny Reichl Hoffmann

(56) References cited:
- WO-A1-2009/027121
- US-A1- 2002 063 799
- US-A1- 2009 017 749

## Description

### FIELD

This application relates to the field of mobile devices, and more particularly, to the integration of mobile devices into the data communication systems of various types of venues.

### BACKGROUND

Many venues count on data communication systems for different aspects of their day-to-day activities. For example, during a sporting event at a stadium, a cash register at a concession stand may be data-based to keep records of the items being purchased and of the incoming and outgoing monetary amounts. In between plays, advertisements are run on giant screens. Replays of the action may also be displayed on the giant screens. All of this information is data-based and various communication channels exist which allow the information to circulate throughout the venue.

As technology advances, individuals have come to expect instantaneous information and ease of access for this information. At the same time, event organizers are looking for ways to reach out to individuals and target various messages in order to maximize the time they have to gain an individual's attention and encourage a transaction.

For example US20090017749A1 describes a system and method for enhancing live events via coordinated content delivery to mobile devices. If it is determined that a mobile device is physically present at a venue, desired types of event feeds are identified and delivered to the mobile device. Similarly, US20020063799A1 describes a system and method for providing multiple perspectives of a venue activity to electronic handheld devices. W02009027121A1 describes a system and method for receiving applications or events from a server when a portable electronic device is within a defined region. A need therefore exists for an integration of a user's wireless device with existing data communications systems in a given venue. Accordingly, a solution that addresses, at least in part, the above is desired.

### SUMMARY

In some aspects, there is provided a mobile device for interacting with a data communication system at a venue, the mobile device having a processor connected to a memory with at least one module stored in the memory for execution by the processor, the mobile device being configured to: recognize a presence of the mobile device at the venue when the mobile device is within a predetermined range of the data communication system; open a communication channel with the data communication system; and exchange data with the data communication system, the data being related to an event taking place at the venue.

In some aspects, there is provided a method for integrating a mobile device into a data communication system at a venue, the method comprising: recognizing a presence of the mobile device at the venue when the mobile device is within a predetermined range of the data communication system; opening a communication channel with the data communication system; and exchanging data with the data communication system, the data being related to an event taking place at the venue.

In some aspects, there is provided a computer readable memory having recorded thereon statements and instructions for execution by a computer to carry out the steps of: recognizing a presence of a mobile device at a venue when the mobile device is within a predetermined range of a data communication system within the venue; opening a communication channel with the data communication system; and exchanging data with the data communication system, the data being related to an event taking place at the venue.

### BRIEF DESCRIPTION OF THE DRAWINGS

For a better understanding of the various embodiments described herein and to show more clearly how they may be carried into effect, reference will now be made, by way of example only, to the accompanying drawings which show at least one exemplary embodiment and in which:
FIG. 1 is a block diagram of an exemplary embodiment of a mobile device;
FIG. 2 is a block diagram of an exemplary embodiment of a communication subsystem component of the mobile device of FIG. 1;
FIG. 3 is an exemplary block diagram of a node of a wireless network;
FIG. 4 is a block diagram illustrating components of a host system in one exemplary configuration for use with the wireless network of FIG. 3 and the mobile device of FIG. 1;
FIG. 5 is a block diagram illustrating an exemplary embodiment of a network comprising a data communication system and a mobile device integrated therewith;
FIG. 6 is a flow chart for a method of integrating a mobile device with a data communication system in accordance with one embodiment; and
FIG. 7 is a schematic illustrating the different layers of an exemplary TCP/IP model and an exemplary OSI model.

### DETAILED DESCRIPTION

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

The following detailed description of the example embodiments does not limit the implementation of the application to any particular computer programming language. The present application may be implemented in any computer programming language provided that the operating system ("OS") provides the facilities that may support the requirements of the present application. An example embodiment implemented in the JAVA™ computer programming language (or other computer programming languages such as C or C++). (JAVA and all JAVA-based trademarks are the trademarks of Sun Microsystems Corporation.) Any limitations presented would be a result of a particular type of operating system or computer programming language and would not be a limitation of the present application.

The embodiments described herein generally relate to a mobile wireless communication device, hereafter referred to as a mobile device, which can be configured according to an IT policy.It should be noted that the term IT policy, in general, refers to a collection of IT policy rules, in which the IT policy rules can be defined as being either grouped or non-grouped and global or per-user. The terms grouped, non-grouped, global and per-user are defined further below. Examples of applicable communication devices include pagers, cellular phones, cellular smart-phones, wireless organizers, personal digital assistants, computers, laptops, handheld wireless communication devices, wirelessly enabled notebook computers and the like.

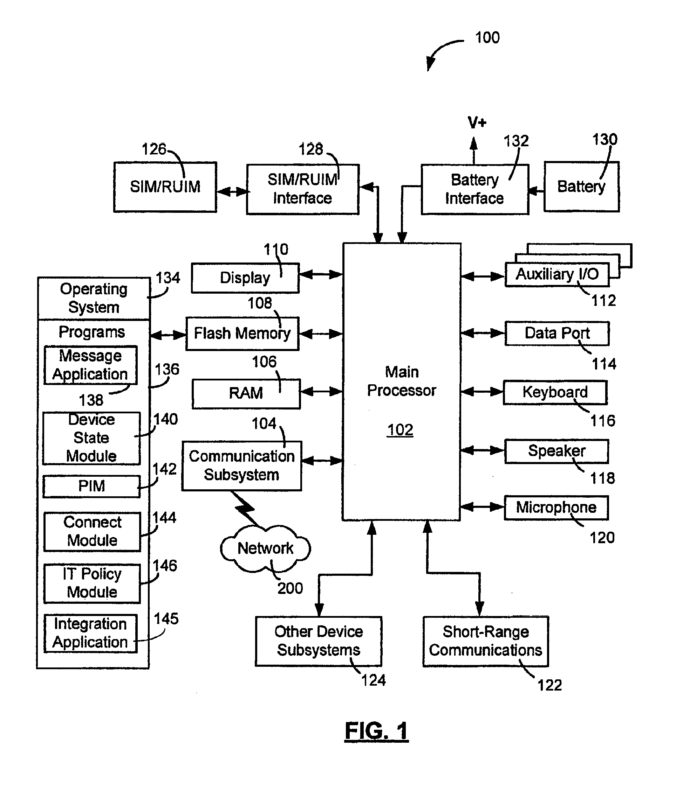

The mobile device is a two-way communication device with advanced data communication capabilities including the capability to communicate with other mobile devices or computer systems through a network of transceiver stations. The mobile device may also have the capability to allow voice communication. Depending on the functionality provided by the mobile device, it may be referred to as a data messaging device, a two-way pager, a cellular telephone with data messaging capabilities, a wireless internet appliance, or a data communication device (with or without telephony capabilities). To aid the reader in understanding the structure of the mobile device and how it communicates with other devices and host systems, reference will now be made to FIGS. 1 through 4.

Referring first to FIG. 1, shown therein is a blok diagram of an exemplary embodiment of a mobile device 100. The mobile device 100 includes a number of components such as a main processor 102 that controls the overall operation of the mobile device 100. Communication functions including data and voice communications, are performed through a communication subsystem 104, The communication subsystem 104 receives messages from and sends messages to a wireless network 200. In this exemplary embodiment of the mobile device 100, the communication subsystem 104 is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the embodiments described herein are intended to use any other suitable standards that are developed in the future. The wireless link connecting the communication subsystem 104 with the wireless network 200 represents one or more different Radio Frequency (RF) channels, operating according to defined protocols specified for GSM/GPRS communications. With newer network protocols, these channels are capable of supporting both circuit switched voice communications and packet switched data communications.

Although the wireless network 200 associated with mobile device 100 is a GSM/GPRS wireless network in one exemplary implementation, other wireless networks may also be associated with the mobile device 100 in variant implementations. The different types of wireless networks that may be employed include, for example, data-centric wireless networks, voice-centric wireless network, and dual-mode networks that can support both voice and data communications over the same physical base stations. Combined dual-mode networks include, but are not limited to, Code Division Multiple Access (CDMA) or CDMA2000 networks, GSW/GPRS networks (as mentioned above), and future third-generation (3G) networks like EDGE and UMTS. Some other examples of data-centric networks include WiFi 802.11, Mobitex™ and DataTAC™ network communication systems. Examples of other voice-centric data networks include Personal Communication Systems (PCS) networks like GSM and Time Division Multiple Access (TDMA) systems.

The main processor 102 also interacts with additional subsystems such as a Random Access Memory (RAM) 106, a flash memory 108, a display 110, an auxiliary input/output (I/O) subsystem 112, a data port 114, a keyboard 116, a speaker 118, a microphone 120, short-range communications 122 and other device subsystems 124.

Some of the subsystems of the mobile device 100 perform communication-related functions, whereas other subsystems may provide "resident" or on-device functions, By way of example, the display 110 and the keyboard 116 may be used for both communication-related functions, such as entering a text message for transmission over the network 200, and device-resident functions such as a calculator or task list.

The mobile device 100 can send and receive communication signals over the wireless network 200 after required network registration or activation procedures have been completed. Network access is associated with a subscriber or user of the mobile device 100. To identify a subscriber, the mobile device 100 requires a SIM/RUIM card 126 (i.e. Subscriber Identity Module or a Removable User Identity Module) to be inserted into a SIM/RUIM interface 128 in order to communicate with a network. The SIM card or RUIM 126 is one type of a conventional "smart card" that can be used to identify a subscriber of the mobile device 100 and to personalize the mobile device 100, among other things. Without the SIM card 126, the mobile device 100 is not fully operational for communication with the wireless network 200. By inserting the SIM card/RUIM 126 info the SIM/RUIM interface 128, a subscriber can access all subscribed services. Services may include: web browsing and messaging such as e-mail, voice mail, Short Message Service (SMS), and Multimedia Messaging Services (MMS). More advanced services may include: point of sale, field service and sales force automation, and networked audio and video content capabilities. The SIM card/RUIM 126 includes a processor and memory for storing information. Once the SIM card/RUIM 126 is inserted into the SIM/RUIM interface 128, it is coupled to the main processor 102. In order to identify the subscriber, the SIM card/RUIM 126 can include some user parameters such as an International Mobile Subscriber Identity (IMSI). An advantage of using the SIM card/RUIM 126 is that a subscriber is not necessarily bound by any single physical mobile device. The SIM card/RUIM 126 may store additional subscriber information for a mobile device as well, including datebook (or calendar) information and recent call information. Alternatively, user identification information can also be programmed into the flash memory 108.

The mobile device 100 is a battery-powered device and includes a battery interface 132 for receiving one or more rechargeable batteries 130. In at least some embodiments, the battery 130 can be a smart battery with an embedded microprocessor. The battery interface 132 is coupled to a regulator (not shown), which assists the battery 130 in providing power V+ to the mobile device 100. Although current technology makes use of a battery, future technologies such as micro fuel cells may provide the power to the mobile device 100.

The mobile device 100 also includes an operating system 134 and software components 136 to 146 which are described in more detail below. The operating system 134 and the software components 136 to 146 that are executed by the main processor 102 are typically stored in a persistent store such as the flash memory 108, which may alternatively be a read-only memory (ROM) or similar storage element (not shown). Those skilled in the art will appreciate that portions of the operating system 134 and the software components 136 to 146, such as specific device applications, or parts thereof, may be temporarily loaded into a volatile store such as the RAM 106. Other software components can also be included as is well known to those skilled in the art.

The subset of software applications 136 that control basic device operations, including data and voice communication applications, will normally be installed on the mobile device 100 during its manufacture. Other software applications include a message application 138 that can be any suitable software program that allows a user of the mobile device 100 to send and receive electronic messages. Various alternatives exist for the message application 138 as is well known to those skilled in the art. Messages that have been sent or received by the user are typically stored in the flash memory 108 of the mobile device 100 or some other suitable storage element in the mobile device 100. In at least some embodiments, some of the sent and received messages may be stored remote from the device 100 such as in a data store of an associated host system that the mobile device 100 communicates with.

The software applications can further include a device state module 140, a Personal Information Manager (PIM) 142, and other suitable modules (not shown). The device state module 140 provides persistence, i.e. the device state module 140 ensures that important device data is stored in persistent memory, such as the flash memory 108, so that the data is not lost when the mobile device 100 is turned off or loses power.

The PIM 142 includes functionality for organizing and manage data items of interest to the user, such as, but not limited to, e-mail, contacts, calendar events, voice mails, appointments, and task items. A PIM application has the ability to send and receive data items via the wireless network 200. PIM data items may be seamlessly integrated, synchronized, and updated via the wireless network 200 with the mobile device subscriber's corresponding data items stored and/or associated with a host computer system. This functionality creates a mirrored host computer on the mobile device 100 with respect to such items. This can be particularly advantageous when the host computer system is the mobile device subscriber's office computer system.

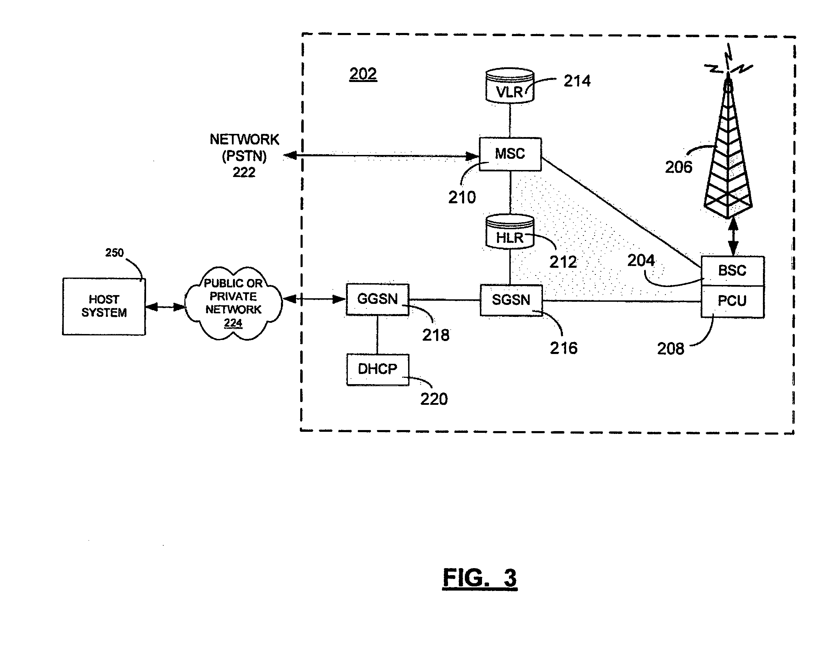

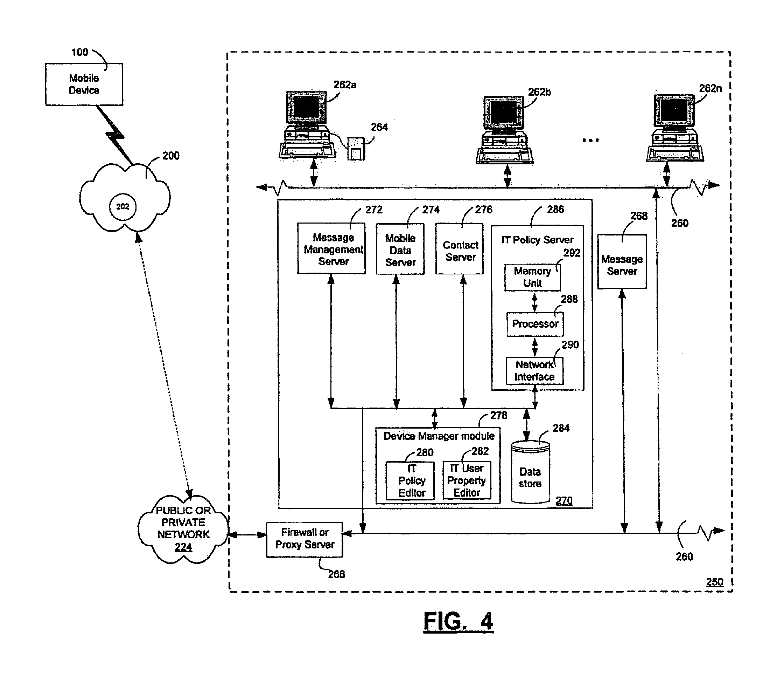

The mobile device 100 also includes a connect module 144, and an IT policy module 146. The connect module 144 implements the communication protocols that are required for the mobile device 100 to communicate with the wireless infrastructure and any host system, such as an enterprise system, that the mobile device 100 is authorized to interface with. Examples of a wireless infrastructure and an enterprise system are given in FIGS. 3 and 4, which are described in more detail below.

The connect module 144 includes a set of APIs that can be integrated with the mobile device 100 to allow the mobile device 100 to use any number of services associated with the enterprise system. The connect module 144 allows the mobile device 100 to establish an end-to-end secure, authenticated communication pipe with the host system. A subset of applications for which access is provided by the connect module 144 can be used to pass IT policy commands from the host system to the mobile device 100. This can be done in a wireless or wired manner. These instructions can then be passed to the IT policy module 146 to modify the configuration of the device 100. Alternatively, in some cases, the IT policy update can also be done over a wired connection.

The IT policy module 146 receives IT policy data that encodes the IT policy. The IT policy module 146 then ensures that the IT policy data is authenticated by the mobile device 100, The IT policy data can then be stored in the flash memory 106 in its native form. After the IT policy data is stored, a global notification can be sent by the IT policy module 146 to all of the applications residing on the mobile device 100. Applications for which the IT policy may be applicable then respond by reading the IT policy data to look for IT policy rules that are applicable.

The IT policy module 146 can include a parser (not shown), which can be used by the applications to read the IT policy rules. In some cases, another module or application can provide the parser. Grouped IT policy rules, described in more detail below, are retrieved as byte streams, which are then sent (recursively, in a sense) into the parser to determine the values of each IT policy rule defined within the grouped IT policy rule. In at least some embodiments, the IT policy module 146 can determine which applications are affected by the IT policy data and send a notification to only those applications. In either of these cases, for applications that aren't running at the time of the notification, the applications can call the parser or the IT policy module 146 when they are executed to determine if there are any relevant IT policy rules in the newly received IT policy data.

All applications that support rules in the IT Policy are coded to know the type of data to expect. For example, the value that is set for the "WEP User Name" IT policy rule is known to be a string; therefore the value in the IT policy data that corresponds to this rule is interpreted as a string. As another example, the setting for the "Set Maximum Password Attempts" IT policy rule is known to be an integer, and therefore the value in the IT policy data that corresponds to this rule is interpreted as such.

An integration application 145 is used to allow the integration of the mobile device into the data communication system of various venues and will be described in more detail below.

After the IT policy rules have been applied to the applicable applications or configuration files, the IT policy module 146 sends an acknowledgement back to the host system to indicate that the IT policy data was received and successfully applied.

Other types of software applications can also be installed on the mobile device 100. These software applications can be third party applications, which are added after the manufacture of the mobile device 100. Examples of third party applications include games, calculators, utilities etc.

The additional applications can be loaded onto the mobile device 100 through at least one of the wireless network 200, the auxiliary I/O subsystem 112, the data port 114, the short-range communications subsystem 122, or any other suitable device subsystem 124. This flexibility in application installation increases the functionality of the mobile device 100 and may provide enhanced on-device functions, communication-related functions, or both. For example, secure communication applications may enable electronic commence functions and other such financial transactions to be performed using the mobile device 100.

The data port 114 enables a subscriber to set preferences through an external device or software application and extends the capabilities of the mobile device 100 by providing for information or software downloads to the mobile device 100 other than through a wireless communication network. The alternate download path may, for example, be used to load an encryption key onto, the mobile device 100 through a direct and thus reliable and trusted connection to provide secure device communication.

The data port 114 can be any suitable port that enables data communication between the mobile device 100 and another computing device. The data port 114 can be a serial or a parallel port. In some instances, the data port 114 can be a USB port that includes data lines for data transfer and a supply line that can provide a charging current to charge the battery 130 of the mobile device 100.

The short-range communications subsystem 122 provides for communication between the mobile device 100 and different systems or devices, without the use of the wireless network 200. For example, the subsystem 122 may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an e-mail message, or web page download will be processed by the communication subsystem 104 and input to the main processor 102. The main processor 102 will then process the received signal for output to the display 110 or alternatively to the auxiliary I/O subsystem 112. A subscriber may also compose data items, such as email messages, for example, using the keyboard 116 in conjunction with the display 110 and possibly the auxiliary I/O subsystem 112. The auxiliary subsystem 112 may include devices such as a touch screen, mouse, track ball, Infrared fingerprint detector, or a roller wheel with dynamic button pressing capability. The keyboard 116 is preferably an alphanumeric keyboard and/or telephone-type keypad. However, other types of keyboards may also be used. A composed item may be transmitted over the wireless network 200 through the communication subsystem 104.

For voice communications, the overall operation of the mobile device 100 is substantially similar, except that the received signals are output to the speaker 118, and signal for transmission are generated by the microphone 120. Alternative voice or audio I/O subsystems, such as a voice message recording subsystem, can also be implemented on the mobile device 100. Although voice or audio signal output is accomplished primarily through the speaker 118, the display 110 can also be used to provide additional information such as the identity of a calling party, duration of a voice call, or other voice call related information,

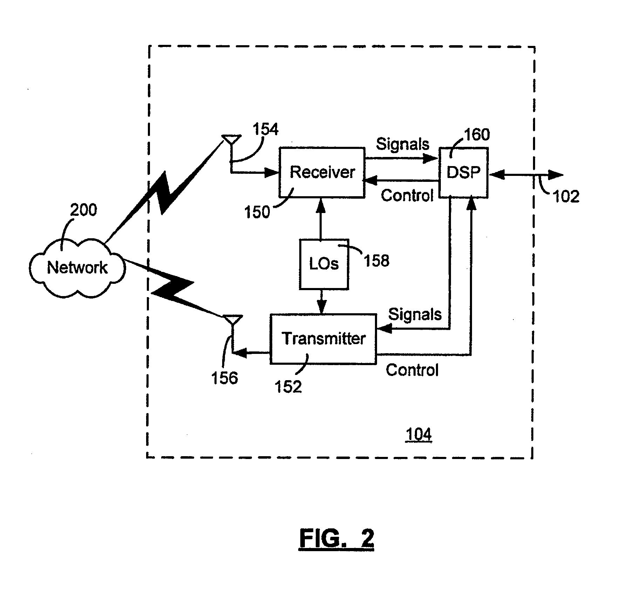

Referring now to FIG. 2, an exemplary block diagram of the communication subsystem component 104 is shown. The communication subsystem 104 includes a receiver 150, a transmitter 152, as well as associated components such as one or more embedded or internal antenna elements 154 and 156, Local Oscillators (LOs) 158, and a processing module such as a Digital Signal Processor (DSP) 160. The particular design of the communication subsystem 104 is dependent upon the communication network 200 with which the mobile device 100 is intended to operate. Thus, it should be understood that the design illustrated in Fig. 2 serves only as one example.

Signals received by the antenna 154 through the wireless network 200 are input to the receiver 150, which may perform such common receiver functions as signal amplification, frequency down conversion, filtering, channel selection, and analog-to-digital (A/D) conversion. A/D conversion of a received signal allows more complex communication functions such as demodulation and decoding to be performed in the DSP 160. In a similar manner, signals to be transmitted are processed, including modulation and encoding, by the DSP 160. These DSP-processed signals are input to the transmitter 152 for digital-to-analog (D/A) conversion, frequency up conversion, filtering, amplification and transmission over the wireless network 200 via the antenna 156. The DSP 160 not only processes communication signals, but also provides for receiver and transmitter control. For example, the gains applied to communication signals in the receiver 160 and the transmitter 152 may be adaptively controlled through automatic gain control algorithms implemented in the DSP 160.

The wireless link between the mobile device 100 and the wireless network 200 can contain one or more different channel, typically different RF channel and associated protocols used between the mobile device 100 and the wireless network 200. An RF channel is a limited resource that must be conserved, typically due to limits in overall bandwidth and limited battery power of the mobile device 100.

When the mobile device 100 is fully operational, the transmitter 152 is typically keyed or turned on only when it is transmitting to the wireless network 200 and is otherwise turned off to conserve resources. Similarly, the receiver 150 is periodically turned off to conserve power until it is needed to receive signals or information (if at all) during designated time periods.

Referring now to FIG. 3, a block diagram of an exemplary implementation of a node 202 of the wireless network 200 is shown. In practice, the wireless network 200 comprises one or more nodes 202. In conjunction with the connect module 144, the mobile device 100 can communicate with the node 202 within the wireless network 200. In the exemplary implementation of FIG. 3, the node 202 is configured in accordance with General Packet Radio Service (GPRS) and Global Systems for Mobile, (GSM) technologies. The node 202 includes a base station control (BSC) 204 with an associated tower station 206, a Packet Control Unit (PCU) 208 added for GPRS support in GSM, a Mobile Switching Center (MSC) 210, a Home Location Register (HLR) 212, a Visitor Location Registry (VLR) 214, a Serving GPRS Support Node (SGSN) 216, a Gateway GPRS Support Node (GGSN) 218, and a Dynamic Host Configuration Protocol (DHCP) 220. This list of components is not meant to be an exhaustive list of the components of every node 202 within a GSM/GPRS network but rather a list of components that are commonly used in communications through the network 200.

In a GSM network, the MSC 210 is coupled to the BSC 204 and to a landline network, such as a Public Switched Telephone Network (PSTN) 222 to satisfy circuit switched requirements. The connection through the PCU 208, the SGSN 216 and the GGSN 218 to a public or private network (Internet) 224 (also referred to herein generally as a shared network infrastructure) represents the data path for GPRS capable mobile devices. In a GSM network expended with GPRS capabilities, the BSC 204 also contains the Packet Control Unit (PCU) 208 that connect to the SGSN 216 to control segmentation, radio channel allocation and to satisfy packet switched requirements. To track the location of the mobile device 100 and availability for both circuit switched and packet switched management, the HLR 212 is shared between the MSC 210 and the SGSN 216. Access to the VLR 214 is controlled by the MSC 210.

The station 206 is a fixed transceiver station and together with the BSC 204 form fixed transceiver equipment. The fixed transceiver equipment provides wireless network coverage for a particular coverage area commonly referred to as a "cell". The fixed transceiver equipment transmits communication signals to and receives communication signals from mobile devices within its cell via the station 206. The fixed transceiver equipment normally performs such functions as modulation and possibly encoding and/or encryption of signals to be transmitted to the mobile device 100 in accordance with particular, usually predetermined, communication protocols and parameters, under control of its controller. The fixed transceiver equipment similarly demodulates and possibly decodes and decrypts, if necessary, any communication signals received from the mobile device 100 within its cell. Communication protocols and parameters may vary between different nodes. For example, one node may employ a different modulation scheme and operate at different frequencies than other nodes.

For all mobile devices 100 registered with a specific network, permanent configuration data such as a user profile is stored in the HLR 212. The HLR 212 also contains location information for each registered mobile device and can be queried to determine the current location of a mobile device. The MSC 210 is responsible for a group of location areas and stores the data of the mobile devices currently in its area of responsibility in the VLR 214. Further, the VLR 214 also contains information on mobile devices that are visiting other networks. The information in the VLR 214 includes part of the permanent mobile device data transmitted from the HLR 212 to the VLR 214 for faster access. By moving additional information from a remote HLR 212 node to the VLR 214, the amount of traffic between these nodes can be reduced so that voice and data services can be provided with faster response times and at the same time requiring less use of computing resources.

The SGSN 216 and the GGSN 218 are elements added for GPRS support; namely packet switched data support, within GSM. The SGSN 216 and the MSC 210 have similar responsibilities within the wireless network 200 by keeping track of the location of each mobile device 100. The SGSN 216 also performs security functions and access control for data traffic on the wireless network 200, The GGSN 218 provides internetworking connections with external packet switched networks and connects to one or more SGSN's 216 via an Internet Protocol (IP) backbone network operated within the network 200. During normal operations, a given mobile device 100 must perform a "GPRS Attach" to acquire an IP address and to access data services. This requirement is not present in circuit switched voice channels as integrated Services Digital Network (ISDN) addresses are used for routing incoming and outgoing calls. Currently, all GPRS capable networks use private, dynamically assigned IP addresses, thus requiring the DHCP server 220 connected to the GGSN 218. There are many mechanisms for dynamic IP assignment, including using a combination of a Remote Authentication Dial-In User Service (RADIUS) server and a DHCP server Once the GPRS Attach is complete, a logical connection is established from a mobile device 100, through the PCU 208, and the SGSN 216 to an Access Point Node (APN) within the GGSN 218. The APN represents a logical end of an IP tunnel that can either access direct Internet compatible services or private network connections. The APN also represents a security mechanism for the network 200, insofar as each mobile device 100 must be assigned to one or more APNs and mobile devices 100 cannot exchange data without first performing a GPRS Attach to an APN that it has been authorized to use. The APN may be considered to be similar to an Internet domain name such as "myconnection.wireless.com".

Once the GPRS Attach operation is complete, a tunnel is created and all traffic is exchanged within standard IP packets using any protocol that can be supported in IP packets. This includes tunneling methods such as IP over IP as in the case with some IPSecurity (IPsec) connections used with Virtual Private Networks (VPN). These tunnels are also referred to as Packet Data Protocol (PDP) Contexts and there are a limited number of these available the network 200. To maximize use of the PDP Contexts, the network 200 will run an idle timer for each PDP Context to determine if there is a lack of activity. When a mobile device 100 is not using its PDP Context, the PDP Context can be de-allocated and the IP address returned to the IP address pool managed by the DHCP server 220.

Referring now to FIG. 4, shown therein is a block diagram illustrating components of an exemplary configuration of a host system 250 that the mobile device 100 can communicate with in conjunction With the connect module 144, The host system 250 will typically be a corporate enterprise or other local area network (LAN), but may also be a home office computer or some other private system, for example, in variant implementations. In this example shown in FIG. 4, the host system 250 is depicted as a LAN of an organization to which a user of the mobile device 100 belongs. Typically, a plurality of mobile devices can communicate wirelessly with the host system 250 through one or more nodes 202 of the wireless network 200.

The host system 250 comprises a number of network components connected to each other by a network 260. For instance, a user's desktop computer 262a with an accompanying cradle 264 for the user's mobile device 100 is situated on a LAN connection. The cradle 264 for the mobile device 100 can be coupled to the computer 262a by a serial or a Universal Serial Bus (USB) connection, for example. Other user computes 262b-262n are also situated on the network 260, and each may or may not be equipped with an accompanying cradle 264, The cradle 264 facilitates the loading of information (e,g. PIM data, private symmetric encryption keys to facilitate secure communications) from the user computer 262a to the mobile device 100, and may be particularly useful for bulk information updates often performed in initializing the mobile device 100 for use. The information downloaded to the mobile device 100 may include certificates used in the exchange off messages.

It will be understood by persons skilled in the art that the user computers 262a-262n will typically also be connected to other peripheral devices, such as punters, etc, which are not explicitly shown in FIG. 4. Furthermore, only a subset of network components of the host system 250 are shown in FIG. 4 for ease of exposition, and it will be understood by persons skilled in the art that the host system 250 will comprise additional components that are not explicitly shown in FIG. 4 for this exemplary configuration. More generally, the host system 250 may represent a smaller part of a larger network (not shown) of the organization, and may comprise different components and/or be arranged in different topologies than, that shown in the exemplary embodiments of FIG. 4.

To facilitate the operation of the mobile device 100 and the wireless communication of messages and message-related data between the mobile device 100 and components of the host system 250, a number of wireless communication support components 270 can be provided. In some implementations, the wireless communication support components 270 can include a message management server 272, a mobile data server 274, a contact server 276, and a device manager module 278. The device manager module 278 includes an IT Policy editor 280 and an IT user property editor 282, as well as other software components for allowing an IT administrator to configure the mobile devices 100. In an alternative embodiment, there may be one editor that provides the functionality of both the IT policy editor 280 and the IT user property editor 282. The support components 270 also include a data store 284, and an IT policy server 286. The IT policy server 286 includes a processor 288, a network interface 290 and a memory unit 292. The processor 288 controls the operation of the IT policy server 286 and executes functions related to the standardized IT policy as described below. The network interface 290 allows the IT policy server 286 to communicate with the various components of the host system 250 and the mobile devices 100. The memory unit 292 can store functions used in implementing the IT policy as well as related data. Those skilled in the art know how to implement these various components. Other components may also be included as is well known to those skilled in the art. Further, in some implementations, the data store 284 can be part of any one of the server

In this exemplary embodiment, the mobile device 100 communicates with the host system 250 through node 202 of the wireless network 200 and a shared network infrastructure 224 such as a service provider network or the public Internet Access to the host system 250 may be provided through one or more routers (not shown), and computing devices of the host system 250 may operate from behind a firewall or proxy server 266. The proxy server 266 provides a secure node and a wireless internet gateway for the host system 250. The proxy server 266 intelligently routes data to the correct destination server within the host system 250.

In some implementations, the host system 250 can include a wireless VPN router (not shown) to facilitate data exchange between the host system 250 and the mobile device 100. The wireless VPN router allows a VPN connection to be established directly through a specific wireless network to the mobile device 100. The wireless VPN router can be used with the Internet Protocol (IP) Version 6 (IPV6) and IP-based wireless network. This protocol can provide enough IP addresses so that each mobile device has a dedicated IP address, making it possible to push information to a mobile device at any time. An advantage of using a wireless VPN router is that it can be an off-the-shelf VPN component, and does not require a separate wireless gateway and separate wireless infrastructure. A VPN connection can preferably be a Transmission Control Protocol (TCP)/IP or User Datagram Protocol (UDP)/IP connection for delivering the messages directly to the mobile device 100 in this alternative implementation.

Messages intended for a user of the mobile device 100 are initially received by a message server 268 of the host system 250. Such messages may originate from any number of sources. For instance, a message may have been sent by a sender from the computer 262b within the host system 250, from a different mobile device (not shown) connected to the wireless network 200 or a different wireless network, or from a different computing device, or other device capable of sending messages, via the shared network infrastructure 224, possibly through an application service provider (ASP) or Internet service provider (ISP), for example.

The message server 268 typically acts as the primary interface for the exchange of messages, particularly e-mail messages, within the organization and over the shared network infrastructure 224. Each user in the organization that has been set up to send and receive messages is typically associated with a user account managed by the message server 268. Some exemplary implementation of the message server 268 include a Microsoft Exchange™ server, a Lotus Domino™ server, a Novell Groupwise^{™} server, or another suitable mail server installed in a corporate environment. In some implementations, the host system 250 may comprise multiple message servers 268. The message server 268 may also be adapted to provide additional functions beyond message management, including the management of data associated with calendars and task lists, for example.

When messages are received by the message server 268, they are typically stored in a data store associated with the message server 268. In at least some embodiments, the data store may be a separate hardware unit, such as data store 284, that the message server 268 communicates with. Messages can be subsequently retrieved and delivered to users by accessing the message server 268. For instance, an e-mail client application operating on a user's computer 262a may request the e-mail messages associated with that user's account stored on the data store associated with the message server 268. These messages are then retrieved from the data store and stored locally on the computer 292a. The data store associated with the message server 268 can store copies of each message that is locally stored on the mobile device 100. Alternatively, the data store associated with the message server 268 can store all of the messages for the user of the mobile device 100 and only a smaller number of messages can be stored on the mobile device 100 to conserve memory. For instance, the most recent messages (i.e. those received in the past two to three months for example) can be stored on the mobile device 100.

When operating the mobile device 100, the user may wish to have e-mail messages retrieved for delivery to the mobile device 100. The message application 138 operating on the mobile device 100 may also request messages associated with the user's account from the message server 268. The message application 138 may be configured (either by the user or by an administrator, possibly in accordance with an organization's information technology (IT) policy) to make this request at the direction of the user, at some pre-defined time interval, or upon the occurrence of some pre-defined event. In some implementations, the mobile device 100 is assigned its own email address, and messages addressed specifically to the mobile device 100 are automatically redirected to the mobile device 100 as they are received by the message server 268.

The message management server 272 can be used to specifically provide support for the management of messages, such as e-mail messages, that are to be handled by mobile devices. Generally, while messages are still stored on the message server 268, the message management server 272 can be used to control when, if, and how messages are sent to the mobile device 100. The message management server 272 also facilitates the handling of messages composed on the mobile device 100, which are sent to the message server 268 for subsequent delivery.

For example, the message management server 272 may monitor the user's "mailbox" (e.g the message store associated with the user's account on the message server 268) for new e-mail messages, and apply user-definable filters to new messages to determine if and how the messages are relayed to the user's mobile device 100. The message management server 272 may also compress and encrypt new messages (e.g. using an encryption technique such as Data Encryption Standard (DES), Triple DES, or Advanced Encryption Standard (AES)) and push them to the mobile device 100 via the shared network infrastructure 224 and the wireless network 200. The message management server 272 may also receive messages composed on the mobile device 100 (e.g. encrypted using Triple DES), decrypt and decompress the composed messages, re-format the composed messages if desired so that they will appear to have originated from the user's computer 262a, and re-route the composed messages to the message server 268 for delivery.

Certain properties or restrictions associated with messages that are to be sent from and/or received by the mobile device 100 can be defined (e.g. by an administrator in accordance with IT policy) and enforced by the message management server 272. These may include whether the mobile device 100 may receive encrypted and/or signed messages, minimum encryption key sizes, whether outgoing messages must be encrypted and/or signed, and whether copies of all secure messages sent from the mobile device 100 are to be sent to a pre-defined copy address, for example.

The message management server 272 may also be adapted to provide other control functions, such as only pushing certain message information or pre-defined portions (e.g. "block") of a message stored on the message server 268 to the mobile device 100. For example, in some cases, when a message is initially retrieved by the mobile device 100 from the message server 268. the message management server 272 may push only the first part of a message to the mobile device 100, with the part being of a pre-defined size (e.g. 2 KB), The user can then request that more of the message be delivered in similar-sized blocks by the message management server 272 to the mobile device 100, possibly up to a maximum pre-defined message size. Accordingly, the message management server 272 facilitates better control over the type of data and the amount of data that is communicated to the mobile device 100, and can help to minimize potential waste of bandwidth or other resources.

The mobile data server 274 encompasses any other server that stores information that is relevant to the corporation. The mobile data server 274 may include, but is not limited to, databases, online data document repositories, customer relationship management (CRM) systems, payment gateways, or enterprise resource planning (ERP) applications.

The contact server 276 can provide information for a list of contacts for the user in a similar fashion as the address book on the mobile device 100. Accordingly, for a given contact, the contact server 276 can include the name, phone number, work address and e-mail address of the contact, among other information. The contact server 276 can also provide a global address list that contains the contact information for all of the contacts associated with the host system 250.

It will be understood by persons skilled in the art that the message management server 272, the mobile data server 274, the contact server 276, the device manager module 278, the data store 284 and the IT policy server 286 do not need to be implemented on separate physical servers within the host system 250. For example, some or all of the functions associated with the message management server 272 may be integrated with the message server 268, or some other server in the host system 250. Alternatively,the host system 250 may comprise multiple message management servers 272, particularly in variant implementations where a large number of mobile devices need to be supported.

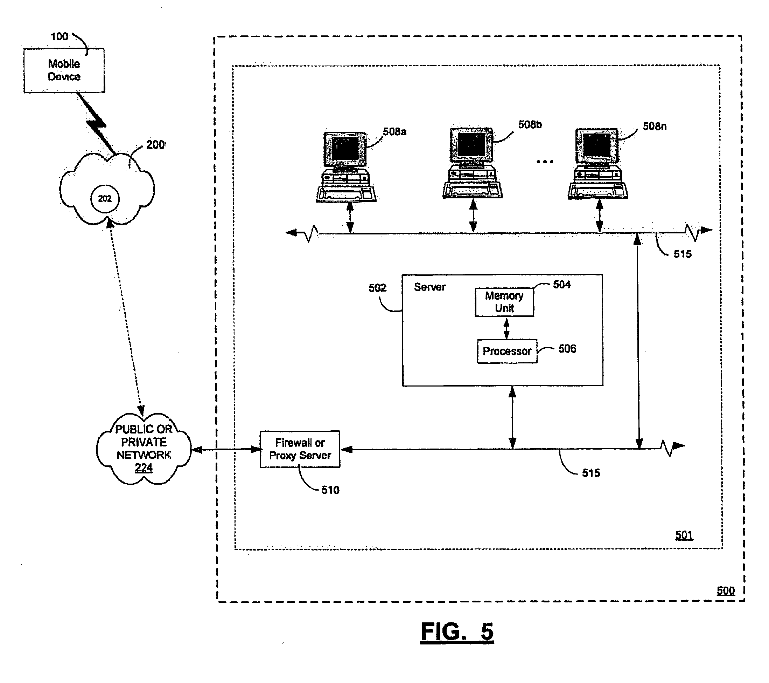

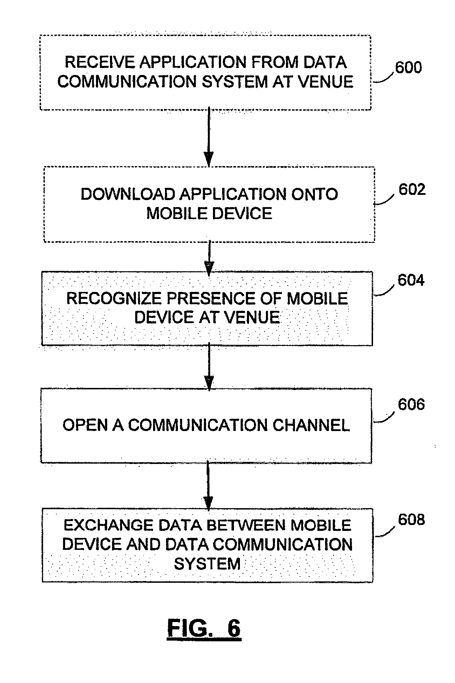

Alternatively, in some embodiments, the IT policy server 286 can provide the IT policy editor 280, the IT user property editor 282 and the data store 284. In some cases, the IT policy server 286 can also provide the device manager module 278. The processor 288 of the IT policy server 286 can be used to perform the various steps of a method for providing IT policy data that is customizable on a per-user basis as explained further below and in conjunction with FIGS. 5 and 6. The processor 288 can execute the editors 280 and 282. In some cases, the functionality of the editors 280 and 282 can be provided by a single editor. In some cases, the memory unit 292 can provide the data store 284.

The device manager module 278 provides an IT administrator with a graphical user interface with which the IT administrator interacts to configure various settings for the mobile devices 100. As mentioned, the IT administrator can use IT policy rules to define behaviors of certain applications on the mobile device 100 that are permitted such as phone, web browser or Instant Messenger use. The IT policy rules can also be used to set specific values for configuration settings that an organization requires on the mobile devices 100 such as auto signature text, WLAN/VoIP/VPN configuration, security requirements (e.g. encryption algorithms, password rules, etc.), specifying themes or applications that are allowed to run on the mobile device 100, and the like.

Referring now to FIG. 5, shown therein is a block diagram illustrating components of an exemplary configuration of a data communication system 501 of a venue 500 that the mobile device 100 can communicate with in conjunction with the connect module 144 and the integration application 145. The venue 500 will typically be a facility hosting a sporting event, an entertainment event, a trade show, or a theme park, but may also be a hotel, a shopping center or some other location in variant implementations. In this example shown in FIG. 5, the communication' system 501 is depicted as a local area network (LAN) of a facility where a user of the mobile device 100 is attending an event. Typical, a plurality of mobile devices can communicate wirelessly within the venue through one or more nodes 202 of the wireless network 200 and a shared network infrastructure 224 such as a service provider network or the public Internet. Access to communication system 501 may be provided through one or more routers (not shown), and computing devices of communication system 501 may operated from behind a firewall or proxy server 510.

In an example embodiment, communication system 501 comprises a wireless VPN router (not shown) to facilitate data exchange between the communication system 501 and mobile device 100. The concept of a wireless VPN router is one in which a VPN connection can be established directly through a specific wireless network to mobile device 100. The possibility of using a wireless VPN router has only recently been available and could be used when Internet Protocol (IP) Version 6 (IPV6) arrives into IP-based wireless networks. This new protocol will provide enough IP addresses to dedicate an IP address to every mobile device, making it possible to push information to a mobile device at any time. An advantage of using a wireless VPN router is that it could be an off-the-shelf VPN component, not requiring a separate wireless gateway and separate wireless infrastructure to be used. A VPN connection would preferably be a Transmission Control Protocol (TCP)/IP or User Datagram Protocol (UDP)/IP connection to deliver the messages directly to mobile device 100 in this example embodinent.

In this example embodiment, the data communication system 501 of the venue 500 comprises at least one server 502 hosting at least a memory unit 504 and a processor 506. Various computer devices 508a-508n are present in the data communication system 501 and interact with the server 502. For example, cash registers at concession stands within the facility may be such computer devices508a-508n. In another example, scanning devices used to scan tickets upon entry into the facility are such computer devices 508a-508n. Other types of computer devices that communicate data relating to the event may also be present. The computer devices 508a-508n, server 502 and firewall 510 may be connected to each other by LAN connections 515. Server 502 may include a communication module (not shown in FIG. 5). This module may process, receive and transmit communications between the computer devices 508a-508n, the server and mobile device 100. Examples of processing, receiving and transmitting communications are as follows. An update of a concession stand menu at a computer device at a concession stand may be sent from the computer device to the server. The server may then process the update (e.g.put it in a format such as email, text message or a pop-up notification window) and transmit the update to the mobile device. Another example of processing, receiving and transmitting communications is that information about a scanned ticket at a computer device which is a ticket scanner may be sent from the computer device to the server. The server may then process the update (e.g. obtain the email address or mobile phone number of the user associated with the ticket and generate a welcome package of information about services available at the venue) and transmit the welcome package to the mobile device (by e.g. email or text message). Other examples of processing, receiving and transmitting communications between the computer devices, the server and the mobile device are described herein.

Server 502 may include a location module (not shown in FIG. 5). This module may use any of various known or hereafter developed technologies for tracking and identifying the location of a mobile device, including technologies such as the GSM localization, global positioning (GPS), base station triangulation, local-range technologies (e.g. Bluetooth, Ultra-Wideband (UWB), Radio Frequency Identification (RFID), Wi-Fi) and the like. The location module allows the server to determine when a mobile device is within a predetermined range close to the venue (by using e.g. location information such as GPS data, relative distances in relation to base stations, or other data representing location provided through use of the technology for tracking and identifying the location of a mobile device).

On the mobile device 100, in addition to the subset of software 136 that control basic device operations, an integration application 145 is present which is adapted to interact with the data communication system 501 of the venue 500. The integration application 145 may either be previously downloaded onto the mobile device 100 or it may be pushed onto the mobile device 100 once the user has connected to the network within the facility. Once the integration application 145 is on the mobile device 100, a communication channel may be opened between the mobile device user and the venue 500. This communication channel is initiated by the integration application 145 on the mobile device 100. In an example embodiment, the communications channel is a secure communications channel, such as for example and without limitation, a channel employing the HTTPS (Hypertext Transfer Protocol Secure) protocol. Other example embodiment communications channels are a synchronous communications channel, a firewall-friendly communications channel, and a socket.

In one example embodiment, software applications running on the processor 506 of the server 502 manage the event and the data communication system 501 in general. For example, the location module on the server may be responsible for recognizing the presence of a mobile device 100 within a predetermined range of the facility. This may occur when the mobile device 100 comes within range of the facility's network. The data communication system 501 may then invite the user of the mobile device 100 (for e.g. by an email or text message) to download the integration application 145 required to open the communication channel, or simply to run the integration application 145 if it is already present on the mobile device 100. Running the integration application 145 will open the communication channel between the data communication system 501 and the mobile device 100.

Once the communication channel is opened between the data communication system 501 and the mobile device 100, event data can be transmitted to the mobile device 100. Dedicated event applications may selectively transmit various types of information to a mobile device 100. For example, a map of the facility and/or an event program may be provided. Other examples include a list of purchase merchandise or menu items available at the venue 500, and coupons or purchase incentives to be used within the facility.

In one example embodiment, the integration application 145 running on the processor 502 is adapted to work with BlackBerry Wallet™, which is a BlackBerry™ device application that is designed to securely store information such as a BlackBerry™ device user's name, shipping and billing addresses, credit card information, and login credentials for web sites and other BlackBerry™ device applications. After a user saves information in the BlackBerry Wallet™, the BlackBerry Wallet™ can populate web forms and fields In applications to reduce the effort required by the user to complete data entry tasks. In this example, BlackBerry Wallet™ can be used to purchase food items and/or merchandise at the facility in an automated fashion. Purchased merchandise and menu items may be charged to the mobile device 100 and purchases may be delivered to a seat or box directly. Users may also monitor the status of the delivery on their mobile device 100. Other financial applications that may be downloaded onto a mobile device 100 can also be used to charge items directly to the device and have the items delivered to a given location.

Other types of data that can be sent to the mobile device 100 include instant replays or photo finishes during a sporting event, local radio streams, and camera streams present at the event. With the aid of media applications on the user's device, the user may then view, listen or otherwise access these types of data. In one example, the user may select from various camera views to watch the available camera streams on the mobile device 100.

In another example embodiment, certain triggers at the event cause certain types of data to be transmitted to the mobile device 100. For example, if the event is a sporting event, an instant replay showed on a giant display screen may automatically be sent to the mobile device 100. In another example, during an event with one or more intermissions, coupons, purchase incentives, and other consumer related information may be sent to the mobile device 100 shortly before the intermission is set to begin. The location of restrooms within the facility may also be sent at this time. In yet another example, biographies or background information for various individuals participating in the event, such as players, actors, comedians, etc. are sent to the mobile device 100 when these individuals are present or active in the given event Various possible alternatives to these time-based or event based triggers will be understood by those skilled in the art.

As indicated above, the data exchanged between the data communication system and the mobile device may take several forms, and can comprise information related to consumer products available during the event, purchase incentives for consumer products available at the event, and financial information related to consumer products purchased at the venue during the event and charged to the mobile device.

In one example embodiment, triggers based on time or occurrences may cause certain data to be sent to the mobile device from the data communication system, such as a replay on a giant screen, a goal scored, an upcoming intermission, etc. The data may also be a real-time video or audio stream from the event. Various other embodiments for types of data and triggers for sending the data will be understood by a person skilled in the art.

Various types of networks and communication protocols may be used to integrate the mobile device 100 into the data communication system 501 of the venue 500, such as Wi-Fi, Bluetooth, Cellular, etc. Real-time, two-way communication is enabled between the data communication system 501 of the venue 500 and the mobile device 100 via the integration application 145 present on the mobile device 100. Multiple levels of users are possible, such as a basic-user and a super-user. The super-user may have additional privileges compared to the basic-user. Additional levels are also possible, such as executive level, VIP level, etc, each level corresponding to a set of privileges and opportunities for interaction with the venue's system,

Reference is now made to FIG. 6, which is a flow chart of a method for integrating a mobile device (e.g, 100 of FIG. 5) Within a data communication system (e.g. 501 of FIG. 5) at a venue (e.g. 500 of FIG, 5). The integration application 145 may be pre-loaded on the mobile device. This may be done for example after the user purchases his/her ticket online through an online ticket broker such as Ticketmaster™. Upon purchasing the ticket, the user is asked to provide his/her email address and/or mobile phone number. After the user purchases his/her ticket, the user may be sent an email or text message with instructions on how to download the integration application 145. For example, the user may be instructed in an email or text message to click on a hypertext link associated with a web site hosted by the venue from where the user can have access to and download the integration application 145.

If the integration application 145 is not already present on the mobile device when the user enters the venue, the integration application 145 may be received by the mobile device, upon entering the venue at 600. An example of how this may be done is as follows. Upon entering the venue, the user's, ticket is scanned with a scanning device (e.g. one of the computer devices 508a-508n), The user's ticket may be a paper ticket or in electronic form (such as in a PDF or other image format file) displayed on the display of the mobile device. In either the paper or electronic ticket form, the ticket may have a bar code which is scanned by a scanning device, Encoded within the bar code is the user's email address and/or mobile phone number. This encoding may be done after the user purchases the ticket online through a ticket broker such as Ticketmaster™ and the ticket broker provides the ticket (with generated bar code) to the user to print-out or electronically store (such as in a PDF or other image format file) on the user's mobile device. The scanning device may send a communication to the server 502 of the user's email address and/or mobile device number. The server 502 may then send an email or text message to the user's mobile device with instructions on how download the integration application 145. For examples, the user may be instructed in an email or text message to click on a hypertext link associated with a web site hosted by the venue from where the user can have access to and download the integration application 145.

The integration application 145is downloaded by the user to the mobile device at 602, The communication system (e.g. the location module on the server 502) is then configured to recognize a presence of the mobile device at the venue when the mobile device is within a predetermined range of the data communication system at 604. A communication channel is opened by the mobile device with the data communication system at 606. Once the communication channel is opened, data may be exchanged between the data communication system and the mobile device at 608, the data being related to an event taking place at the venue.

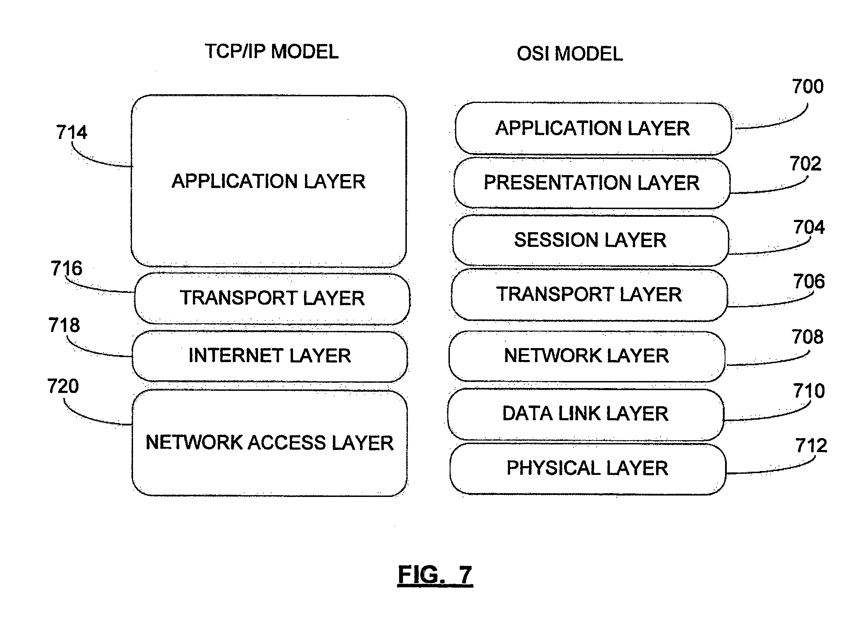

The present system and method can be implemented using various computer network protocol designs. One example embodiment is an implementation using the Open System Interconnection (OSI) Reference Model, as illustrated in Fig. 7. In its most basic form, the OSI model divides network architecture into seven layers which, from top to bottom, are the Application 700, Presentation 702, Session 704, Transport 706, Network 708, Data-Link 710, and Physical 712 Layers, Each layer provide services to the layer above it and receives services from the layer below it. On each layer, an instance (not shown) provides serves to the instances at the layer above and requests service from the layer below. Two instances at one layer may be connected by a horizontal protocol connection on that layer.

The application layer 700, the layer closest to the end user, may interact directly with the software applications. This layer interacts with software applications that implement a communicating component. Some examples of applications with which the application layer 700 interacts are Blackberry Wallet™, Blackberry Messenger™, and Blackberry App World™, The integration application 145 is also an application that may be interacted with in the application layer 700, Some examples of protocols used for application layer 700 implementation are Domain Name System (DNS), HyperText Transfer Protocol (HTTP), HyperText Transfer Protocol Secure (HTTPS), Multipurpose Internet Mail Extensions (MIME), Multimedia Messaging Service (MMS), Personal Idenfication Number (PIN), Post Office Protocol (POP), Short Message Service (SMS), Simple Mail Transfer Protocol (SMTP). Some application layer 700 functions typically include identifying communication partners, determining resource availability, and synchronizing communication. When identifying communication partners, the application layer 700 determines the identity and availability of communication partners for an application with data to transmit. When determining resource availability, the application layer decides whether sufficient network resources for the requested communication exist in synchronizing communication, all communication between applications requires cooperation that is managed by the application layer 700.

The presentation layer 702 works to transform data into the form that the application layer 700 can accept, This layer provides independence from differences in data representation (e.g., encryption) by translating from application to network format, and vice versa. Some of the services offered by the presentation layer 702 are encryption, compression, and Web services, and SOA (Service Oriented Architecture). Protocols such as MIME, XML-Data Reduced (XDR), Secure Sockets Layer (SSL), and Transport Layer Security (TLS) may be used in the presentation layer 702.

The session layer 704 controls the connections between computers. It establishes, manages and terminates the connections between the local and remote application. It provides for full-duplex, half-duplex, or simplex operation, and establishes check-pointing, adjournment, termination, and restart procedures. Authentication, permissions, and Session restoration are examples of services offered by the session layer 704. The Password Authentication Protocol (PAP) and the Point-to-Point Tunneling Protocol (PPTP) are examples of protocols used within the session layer 704.

The transport layer 706 provides transparent transfer of data between end users, providing reliable data transfer services to the upper layers. The transport layer 706 controls the reliability of a given link through flow control, segmentation/desegmentation, and error control. Examples of protocols that may be used in the transport layer 706 are Transmission Control Protocol (TCP), Ports, Stream Control Transmission Protocol (SCTP), and User Datagram Protocol (UDP).

The network layer 708 provides the functional and procedural means of transferring variable length data sequences from a source to a destination via one or more netwoks, while maintaining the quality of service requested by the transport layer 706. The network layer 708 performs network routing functions, and might also perform fragmentation and reassembly, and report delivery errors, Cryptographic keys and error control are examples of services provided by the network layer 708, while Internet Protocol (IP), Internet Protocol Security (IPsec), SSL, TLS, and Virtual Private Network (VPN) are examples of protocols used therein.

The data link layer 710 is responsible for physical addressing and provides the functional and procedural means to transfer data between network entities and to detect and possibly correct errors that may occur in the physical layer 712. Asynchronous Transfer Mode (ATM), Cisco Discovery Protocol (CDP), encapsulation of data packets into frames, Ethernet, Fiber Distributed Data Interface (FDDI), frame relay, frame synchronization, IEEE 802.11 Wireless LAN. Logical Link Control (LLC), Message Authentication Code (MAC), Point-to-Point Protocol (PPP), Quality of Service (QoS), and Virtual LAN (VLAN) are examples of protocols that may be used within the data link layer 710.

The physical layer 712 defines the relationship between a device and a physical medium. This includes the layout of pins, voltages, cable specifications, hubs, repeaters, network adapters, host bus adapters and more domain-specific language (DSL) is a service that may be offered, while some examples of protocols are Code Division Multiple Access (CDMA), Ethernet Physical Layer (including 1000Base-T and other varieties), 802.11 Wi-Fi Physical Layer, Integrated Services Digital Network (ISDN), T1/E1, Synchronous Optical Network (SONET), Global System for Mobile Communications (GSM), Bluetooth. Firewire, Universal Serial Bus (USB), and Satellite.

In another example embodiment, the method and system described herein are implemented using a Transmission Control Protocol (TCP) / Internet Protocol (IP) model, also illustrated in Fig. 7. The three top layers in the OSI model-the application layer 700, the presentation layer 702 and the session layer 704-are not distinguished separately in the TCP/IP model where it is just the application Layer 714. The transport layers 706, 716 roughly correspond and the internet layer 718 is usually directly mapped into the OSI Model's network layer 708, The network access layer 720 combines the functions of the data link layer 710 and the physical layer 712.

Other frameworks for computer network protocols, existing and to be developed, may also be used with the system and method described herein, as will be apparent to those skilled in the art.

While the present disclosure is primarily described as a method, a person of ordinary skill in the art will understand that the present disclosure is also directed to an apparatus for carrying out the disclosed method and including apparatus parts for performing each described method block, be it by way of hardware components, a computer programmed by appropriate software to enable the practice of the disclosed method, by any combination of the two, or in any other manner. Moreover, an article of manufacture for use with the apparatus, such as a pre-recorded storage device or other similar computer readable medium including program instructions recorded thereon, or a computer data signal carrying computer readable program instructions may direct an apparatus to facilitate the practice of the disclosed method. It is understood that such apparatus, articles of manufacture, and computer data signals also come within the scope of the present disclosure.

The embodiments of the present disclosure described above are intended to be examples only. Those of skill in the art may effect alterations, modifications and variations to the particular example embodiments without departing from the intended scope of the present disclosure. In particular, selected features from one or more of the above-described example embodiments may be combined to create alternative example embodiments not explicitly described, features suitable for such combinations being readily apparent to persons skilled in the art. The subject matter descnbed herein in the recited claims intends to cover and embrace all suitable changes in technology.

## Claims

1. A mobile device (100) for interacting with a data communication system (501) at a venue (500), the mobile device (100) having a processor (102) connected to a memory (106) with at least one module stored in the memory (106) for execution by the processor (102), the mobile device being configured to:
recognize a presence of the mobile device (100) at the venue (500) when the mobile device (100) is within a predetermined range of the data communication system (501); wherein
the at least one module corresponds to an integration application (145), the integration application (145) being configured to:
open a communication channel with said data communication system (501); and
exchange data with said data communication system (501), said data being related to an event taking place at said venue (500); and
a financial application is stored in the memory (106) for execution by the processor (102), the financial application being configured to:
interact with the integration application (145) to charge consumer products purchased at the venue (500) during the event directly to the mobile device (100).

2. A mobile device (100) as claimed in claim 1, wherein said mobile device (100) is further configured to receive from said data communication system (501), upon entering said venue (500), an application to be downloaded onto said mobile device (100) to allow said mobile device (100) to recognize a presence, open a communication channel, and exchange data.

3. A mobile device (100) as claimed in claims 1 or 2, wherein the data comprises information related to consumer products available during the event at the venue (500), and/or purchase incentives for consumer products available at the event, and/or an audio stream and/or a video stream of at least part of the event.

4. A mobile device (100) as claimed in any one of claims 1 to 3, wherein the financial application is adapted to populate web forms and fields in an automated fashion.

5. A mobile device (100) as claimed in claim 1, wherein the data is exchanged in accordance with a user level associated with said mobile device (100).

6. A mobile device (100) as claimed in any one of claims 1 to 5, wherein the data is real-time information triggered by one of time and an occurrence during the event.

7. A mobile device as claimed in any one of claims 1 to 6, wherein the mobile device is further configured to have the items purchased at the venue (500) delivered to a given location.

8. A method for integrating a mobile device (100) into a data communication system (501) at a venue (500), the method comprising the steps of:
recognizing a presence of the mobile device (100) at the venue (500) when the mobile device (100) is within a predetermined range of the data communication system (501);
opening a communication channel with said data communication system (501); and
exchanging data with said data communication system (501), said data being related to an event taking place at said venue (500);
the steps being performed by a processor (102) within the mobile device (100) connected to a memory (106) with at least one module corresponding to an integration application (145) stored in the memory (106) for execution by the processor (102), wherein the integration application (145) interacts with a financial application on the mobile device (100) in order to charge consumer products purchased at the venue (500) during the event directly to the mobile device (100).

9. A method as claimed in claim 8, further comprising a step of receiving from said data communication system (501), upon entering said venue (500), an application to be installed on said mobile device (100) to allow said mobile device (100) to recognize a presence, open a communication channel, and exchange data.

10. A method as claimed in claims 8 or 9, wherein the data comprises information related to consumer products available during the event at the venue (500), and/or purchase incentives for consumer products available at the event, and/or an audio stream and/or a video stream of at least part of the event.

11. A method as claimed in any one of claims 8 to 10, wherein the financial application is adapted to populate web forms and fields in an automated fashion.

12. A method as claimed in any one of claims 8 to 11, wherein the data is exchanged in accordance with a user level associated with the mobile device (100).

13. A method as claimed in any one of claims 8 to 12, wherein the data is real-time information triggered by one of time and an occurrence during the event.

14. A method as claimed in any one of claims 8 to 13, wherein the items purchased at the venue are delivered to a given location.

15. A computer readable memory (102) having recorded thereon statements and instructions for execution by a computer to carry out the steps of:
recognizing a presence of a mobile device (100) at a venue (500) when the mobile device (100) is within a predetermined range of a data communication system (501) within the venue;
opening a communication channel with said data communication system (501);
exchanging data with said data communication system (501), said data being related to an event taking place at said venue (500); and
interacting with a financial application on the mobile device (100) in order to charge consumer products purchased at the venue (500) during the event directly to the mobile device (100).

## Patentansprüche

1. Mobilvorrichtung (100) zum Interagieren mit einem Datenkommunikationssystem (501) an einem Veranstaltungsort (500), wobei die Mobilvorrichtung (100) einen Prozessor (102) aufweist, der mit einem Speicher (106) verbunden ist, der mindestens ein Modul, das auf dem Speicher gespeichert ist, (106) zur Ausführung durch den Prozessor (102) aufweist, wobei die Mobilvorrichtung dazu konfiguriert ist:
eine Anwesenheit der Mobilvorrichtung (100) an dem Veranstaltungsort (500) zu erkennen, wenn sich die Mobilvorrichtung (100) in einer vorbestimmten Reichweite des Datenkommunikationssystems (501) befindet, wobei
das mindestens eine Modul einer Einbindungsanwendung (145) entspricht, wobei die Einbindungsanwendung (145) dazu konfiguriert ist:
einen Kommunikationskanal mit dem Datenkommunikationssystem (501) zu öffnen und
Daten mit dem Datenkommunikationssystem (501) auszutauschen, wobei sich die Daten auf ein Ereignis beziehen, das an dem Veranstaltungsort (500) stattfindet, und
in dem Speicher (106) eine Finanzanwendung zur Ausführung durch den Prozessor (102) gespeichert ist, wobei die Finanzanwendung dazu konfiguriert ist:
mit der Einbindungsanwendung (145) zu interagieren, um Konsumgüter bzw. Konsumprodukte, die während des Ereignisses an dem Veranstaltungsort (500) gekauft worden sind, der Mobilvorrichtung (100) unmittelbar zu berechnen.

2. Mobilvorrichtung (100) nach Anspruch 1, wobei die Mobilvorrichtung (100) ferner dazu konfiguriert ist, von dem Datenkommunikationssystem (501) nach Betreten des Veranstaltungsortes (500) eine Anwendung zu erhalten, die auf die Mobilvorrichtung (100) heruntergeladen werden soll, um es der Mobilvorrichtung (100) zu ermöglichen, eine Anwesenheit zu erkennen, einen Kommunikationskanal zu öffnen und Daten auszutauschen.

3. Mobilvorrichtung (100) nach Anspruch 1 oder 2, wobei die Daten Information, die sich auf Konsumgüter bezieht, die während des Ereignisses an dem Veranstaltungsort (500) erhältlich sind, und/oder Kaufanreize für Konsumgüter, die an dem Ereignis erhältlich sind, und/oder einen Audiostream und/oder einen Videostream mindestens eines Teils des Ereignisses aufweisen.

4. Mobilvorrichtung (100) nach einem der Ansprüche 1 bis 3, wobei die Finanzanwendung dazu ausgelegt ist, Webformulare und Felder automatisch zu befüllen.

5. Mobilvorrichtung (100) nach Anspruch 1, wobei die Daten gemäß einer Benutzerstufe ausgetauscht werden, die mit der Mobilvorrichtung (100) verknüpft ist.

6. Mobilvorrichtung (100) nach einem der Ansprüche 1 bis 5, wobei die Daten Echtzeit-Information sind, die durch eines aus einer Zeit und einem Geschehnis während des Ereignisses angestoßen wird.

7. Mobilvorrichtung nach einem der Ansprüche 1 bis 6, wobei die Mobilvorrichtung ferner dazu konfiguriert ist, dass die an dem Veranstaltungsort (500) gekauften Gegenstände an eine vorgegebene Örtlichkeit liefern zu lassen.

8. Verfahren zum Einbinden einer Mobilvorrichtung (100) in ein Datenkommunikationssystem (501) an einem Veranstaltungsort (500), wobei das Verfahren die folgenden Schritte aufweist:
Erkennen einer Anwesenheit der Mobilvorrichtung (100) an dem Veranstaltungsort (500), wenn sich die Mobilvorrichtung (100) in einer vorbestimmten Reichweite des Datenkommunikationssystems (501) befindet,
Öffnen eines Kommunikationskanals mit dem Datenkommunikationssystem (501) und
Austauschen von Daten mit dem Datenkommunikationssystem (501), wobei sich die Daten auf ein Ereignis beziehen, das an dem Veranstaltungsort (500) stattfindet,
wobei die Schritte von einem Prozessor (102) in der Mobilvorrichtung (100) durchgeführt werden, der mit einem Speicher (106) verbunden ist, der mindestens ein Modul, das einer Einbindungsanwendung (145) entspricht, die auf dem Speicher (106) gespeichert ist, zur Ausführung durch den Prozessor (102) aufweist, wobei die Einbindungsanwendung (145) mit einer Finanzanwendung auf der Mobilvorrichtung (100) interagiert, um Konsumgüter bzw. Konsumprodukte, die während des Ereignisses an dem Veranstaltungsort (500) gekauft worden sind, der Mobilvorrichtung (100) unmittelbar zu berechnen.

9. Verfahren nach Anspruch 8, ferner mit einem Schritt des Erhaltens einer Anwendung, die auf der Mobilvorrichtung (100) installiert werden soll, von dem Datenkommunikationssystem (501) nach Betreten des Veranstaltungsortes (500), um es der Mobilvorrichtung (100) zu ermöglichen, eine Anwesenheit zu erkennen, einen Kommunikationskanal zu öffnen und Daten auszutauschen.

10. Verfahren nach Anspruch 8 oder 9, wobei die Daten Information, die sich auf Konsumgüter bezieht, die während des Ereignisses an dem Veranstaltungsort (500) erhältlich sind, und/oder Kaufanreize für Konsumgüter, die an dem Ereignis erhältlich sind, und/oder einen Audiostream und/oder einen Videostream mindestens eines Teils des Ereignisses aufweisen.

11. Verfahren nach einem der Ansprüche 8 bis 10, wobei die Finanzanwendung dazu ausgelegt ist, Webformulare und Felder automatisch zu befüllen.

12. Verfahren nach einem der Ansprüche 8 bis 11, wobei die Daten gemäß einer Benutzerstufe ausgetauscht werden, die mit der Mobilvorrichtung (100) verknüpft ist.

13. Verfahren nach einem der Ansprüche 8 bis 12, wobei die Daten Echtzeit-Information sind, die durch eines aus einer Zeit und einem Geschehnis während des Ereignisses angestoßen wird.

14. Verfahren nach einem der Ansprüche 8 bis 13, wobei die Gegenstände, die an dem Veranstaltungsort gekauft worden sind, an eine vorgegebene Örtlichkeit geliefert werden.

15. Computerlesbarer Speicher (102), die darauf Angaben und Anweisungen zur Ausführung durch einen Computer aufgezeichnet hat, um die folgenden Schritte auszuführen:
Erkennen einer Anwesenheit der Mobilvorrichtung (100) an dem Veranstaltungsort (500), wenn sich die Mobilvorrichtung (100) in einer vorbestimmten Reichweite des Datenkommunikationssystems (501) in dem Veranstaltungsort befindet,
Öffnen eines Kommunikationskanals mit dem Datenkommunikationssystem (501) und
Austauschen von Daten mit dem Datenkommunikationssystem (501), wobei sich die Daten auf ein Ereignis beziehen, das an dem Veranstaltungsort (500) stattfindet, und
Interagieren mit einer Finanzanwendung auf der Mobilvorrichtung (100), um Konsumgüter bzw. Konsumprodukte, die während des Ereignisses an dem Veranstaltungsort (500) gekauft worden sind, der Mobilvorrichtung (100) unmittelbar zu berechnen.

## Revendications

1. Dispositif mobile (100) destiné à interagir avec un système de communication de données (501) sur un site (500), le dispositif mobile (100) comprenant un processeur (102) connecté à une mémoire (106) avec au moins un module stocké dans la mémoire (106) pour être exécuté par le processeur (102), le dispositif mobile étant configuré pour :
reconnaître une présence du dispositif mobile (100) sur le site (500) lorsque le dispositif mobile (100) est à une distance de portée prédéterminée du système de communication de données (501) ;
dans lequel ledit au moins un module correspond à une application d'intégration (145), l'application d'intégration (145) étant configurée pour :
ouvrir un canal de communication avec ledit système de communication de données (501) ; et
échanger des données avec ledit système de communication de données (501), lesdites données étant liées à un événement qui se produit sur le site (500) ; et
une application financière est stockée dans la mémoire (106) pour être exécutée par le processeur (102), l'application financière étant configurée pour :
interagir avec l'application d'intégration (145) pour débiter directement sur le dispositif mobile (100) des produits de consommation achetés sur le site (500) pendant l'événement.

2. Dispositif mobile (100) selon la revendication 1, ledit dispositif mobile (100) étant en outre configuré pour recevoir dudit système de communication de données (501), lorsqu'il arrive sur le site (500), une application à télécharger sur ledit dispositif mobile (100) afin de permettre audit dispositif mobile (100) de reconnaître une présence, d'ouvrir un canal de communication et d'échanger des données.

3. Dispositif mobile (100) selon la revendication 1 ou 2, dans lequel les données comprennent des informations portant sur des produits de consommation disponibles pendant l'événement sur le site (500) et/ou des incitations à l'achat de produits de consommation disponibles pendant l'événement et/ou un flux audio et/ou un flux vidéo d'au moins une partie de l'événement.

4. Dispositif mobile (100) selon l'une quelconque des revendications 1 à 3, dans lequel l'application financière est conçue pour renseigner de manière automatique des formulaires web et leurs champs.

5. Dispositif mobile (100) selon la revendication 1, dans lequel les données sont échangées en fonction d'un niveau d'utilisateur qui est associé audit dispositif mobile (100).

6. Dispositif mobile (100) selon l'une quelconque des revendications 1 à 5, dans lequel les données sont des informations en temps réel déclenchées soit par une heure, soit par une occurrence au cours de l'événement.

7. Dispositif mobile (100) selon l'une quelconque des revendications 1 à 6, le dispositif mobile étant en outre configuré pour que les articles achetés sur le site (500) soient livrés à un endroit déterminé.

8. Procédé d'intégration d'un dispositif mobile (100) dans un système de communication de données (501) sur un site (500), le procédé comprenant les étapes consistant à :
reconnaître une présence du dispositif mobile (100) sur le site (500) lorsque le dispositif mobile (100) est à une distance de portée prédéterminée du système de communication de données (501) ;
ouvrir un canal de communication avec ledit système de communication de données (501) ; et
échanger des données avec ledit système de communication de données (501), lesdites données étant liées à un événement qui se produit sur le site (500) ;
les étapes étant exécutées par un processeur (102) situé au sein du dispositif mobile (100) et relié à une mémoire (106), au moins un module correspondant à une application d'intégration (145) étant stocké dans la mémoire (106) pour être exécuté par le processeur (102), l'application d'intégration (145) interagissant avec une application financière sur le dispositif mobile (100) afin de débiter directement sur le dispositif mobile (100) des produits de consommation achetés sur le site (500) pendant l'événement.

9. Procédé selon la revendication 8, comprenant en outre une étape consistant à recevoir dudit système de communication de données (501), lors de l'arrivée sur le site (500), une application à télécharger sur ledit dispositif mobile (100) afin de permettre audit dispositif mobile (100) de reconnaître une présence, d'ouvrir un canal de communication et d'échanger des données.

10. Procédé selon la revendication 8 ou 9, dans lequel les données comprennent des informations portant sur des produits de consommation disponibles pendant l'événement sur le site (500) et/ou des incitations à l'achat de produits de consommation disponibles pendant l'événement et/ou un flux audio et/ou un flux vidéo d'au moins une partie de l'événement.

11. Procédé selon l'une quelconque des revendications 8 à 10, dans lequel l'application financière est conçue pour renseigner de manière automatique des formulaires web et leurs champs.

12. Procédé selon l'une quelconque des revendications 8 à 11, dans lequel les données sont échangées en fonction d'un niveau d'utilisateur qui est associé audit dispositif mobile (100).

13. Procédé selon l'une quelconque des revendications 8 à 12, dans lequel les données sont des informations en temps réel déclenchées soit par une heure, soit par une occurrence au cours de l'événement.

14. Procédé selon l'une quelconque des revendications 8 à 13, dans lequel les articles achetés sur le site sont livrés à un endroit déterminé.

15. Mémoire lisible par ordinateur (102) portant enregistrées des déclarations et des instructions destinées à être exécutées par un ordinateur afin d'exécuter les étapes consistant à :
reconnaître une présence d'un dispositif mobile (100) sur un site (500) lorsque le dispositif mobile (100) est à une distance de portée prédéterminée d'un système de communication de données (501) situé sur le site ;
ouvrir un canal de communication avec ledit système de communication de données (501) ; et
échanger des données avec ledit système de communication de données (501), lesdites données étant liées à un événement qui se produit sur le site (500) ;
interagir avec une application financière sur le dispositif mobile (100) afin de débiter directement sur le dispositif mobile (100) des produits de consommation achetés sur le site (500) pendant l'événement.
